(19) **Europäisches Patentamt / European Patent Office / Office européen des brevets**

(11) **EP 4 769 572 A1**

(12) **EUROPEAN PATENT APPLICATION**
published in accordance with Art. 153(4) EPC

(43) Date of publication:
01.07.2026 Bulletin 2026/27

(21) Application number: 25831202.4

(22) Date of filing: 18.06.2025

(51) International Patent Classification (IPC):
$H01M\ 4/62^{(2006.01)}$    $C01B\ 32/158^{(2017.01)}$
$H01M\ 4/13^{(2010.01)}$    $H01M\ 10/052^{(2010.01)}$
$H01M\ 4/04^{(2006.01)}$    $C01B\ 32/174^{(2017.01)}$
$H01M\ 4/136^{(2010.01)}$    $H01M\ 4/02^{(2006.01)}$

(52) Cooperative Patent Classification (CPC):
C01B 32/158; C01B 32/174; H01M 4/02;
H01M 4/04; H01M 4/13; H01M 4/131; H01M 4/136;
H01M 4/62; H01M 10/052; Y02E 60/10

(86) International application number:
PCT/KR2025/008438

(87) International publication number:
WO 2025/263992 (26.12.2025 Gazette 2025/52)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 18.06.2024 KR 20240079211
18.06.2024 KR 20240079212

(71) Applicant: **LG ENERGY SOLUTION, LTD.**
**Seoul 07335 (KR)**

(72) Inventors:
• **JANG, Eun Ji**
**Yuseong-gu Daejeon, 34122 (KR)**
• **LEE, Ki Seok**
**Yuseong-gu Daejeon, 34122 (KR)**
• **LEE, Ho Chan**
**Yuseong-gu Daejeon, 34122 (KR)**
• **SHIN, Dong Mok**
**Yuseong-gu Daejeon, 34122 (KR)**
• **CHUNG, Koo Seung**
**Yuseong-gu Daejeon, 34122 (KR)**
• **LEE, Nam Jeong**
**Yuseong-gu Daejeon, 34122 (KR)**
• **BAEK, Doo Hyun**
**Yuseong-gu Daejeon, 34122 (KR)**
• **KWON, Soon Hyung**
**Yuseong-gu Daejeon, 34122 (KR)**

(74) Representative: **Hoffmann Eitle**
**Patent- und Rechtsanwälte PartmbB**
**Arabellastraße 30**
**81925 München (DE)**

(54) **METHOD FOR PREPARING EXPANDED CARBON NANOTUBE POWDER, DRY ELECTRODE COMPRISING EXPANDED CARBON NANOTUBE POWDER PREPARED THEREBY, AND LITHIUM SECONDARY BATTERY COMPRISING SAME**

(57) The present invention relates to a method for preparing an expandable carbon nanotube powder, including disaggregating carbon nanotube aggregates via mutual collision in a disaggregation device in a solvent-free state, wherein the disaggregation is performed by the rotation of two or more rotors provided in the disaggregation device and by a high-pressure gas sprayed from a nozzle provided in the disaggregation device, the rotors have a rotation speed of 4100 rpm or greater, and the nozzle sprays the high-pressure gas at a pressure of 3.5 bar or greater.

[FIG. 2]

5.0kV 9.2mm x1.00k SE(U)    50.0um

EP 4 769 572 A1

**Description**

## TECHNICAL FIELD

### Cross-reference to Related Applications

This application claims priority from Korean Patent Application Nos. 10-2024-0079211, filed on 6/18/2024, and 10-2024-0079212, filed on 6/18/2024, the disclosures of which are incorporated by reference herein.

### Technical Field

The present invention relates to a method for preparing an expandable carbon nanotube powder, a dry electrode including the expandable carbon nanotube powder prepared thereby, and a lithium secondary battery including the same.

## BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices.

The secondary batteries are generally manufactured in a way that an electrode active material slurry is applied onto a positive electrode current collector and a negative electrode current collector to form an electrode active material layer, which is then subjected to drying and rolling to prepare a positive electrode and a negative electrode, and the positive electrode and the negative electrode are stacked on both sides of a separator to form an electrode assembly having a predetermined shape, and then the electrode assembly is accommodated in a battery case, an electrolyte is injected, and the battery case is sealed.

Meanwhile, as a solvent contained in the slurry evaporates in the process of drying the electrode active material slurry, defects, such as pinholes or cracks, may be generated in the electrode active material layer formed on the current collector. In addition, during the drying process, the electrode active material slurry is not dried uniformly at an internal portion and an external portion thereof, and thus a powder floating phenomenon may occur due to a difference in solvent evaporation rate. That is, powder present in a portion dried earlier may float and form a gap from a portion dried relatively later, resulting in degradation of electrode quality.

Therefore, to address the limitations described above, drying devices capable of controlling the evaporation rate of the solvent while allowing the inside and outside of the electrode active material slurry to be uniformly dried have been considered, but these drying devices are very expensive and require considerable cost and time for operation, and thus have poor manufacturing processability.

Meanwhile, the solvent contained in a typical electrode active material slurry is N-methyl-2-pyrrolidone (NMP), which has a high boiling point and thus requires high heat energy and a very long drying furnace to be dried, making it highly unsuitable for mass production. In addition, N-methyl-2-pyrrolidone (NMP) is a toxic substance and is harmful to living things, thereby failing to be environmentally friendly.

Therefore, there has been a recent trend of active research on dry electrodes in which electrodes are prepared without using solvents. The dry electrode is generally prepared by laminating a free-standing type electrode material mixture film, which includes an electrode active material, a binder, and a conductive material and is prepared in a form of a sheet, on a current collector. The electrode material mixture film involves a process in which, first, an electrode active material, a carbon material as a conductive material, and a fibrillizable binder are mixed together using a blender or the like, the binder is fibrillized by applying a shear force through a process such as jet-milling or kneading, and a free-standing film is then prepared by calendaring the obtained mixture into a film shape.

However, unlike a wet electrode in which an electrode active material, a conductive material, and a fibrillizable binder are mixed in a solvent, in the preparation of the dry electrode, the components are mixed in a solvent-free state, resulting in poor dispersibility of the conductive material. In this case, a method of first dispersing a conductive material to improve the dispersibility of the conductive material, and then mixing an electrode active material, the pre-dispersed conductive material, and a fibrillizable binder has been suggested, but the typical pre-dispersion of the conductive material induces excessive cutting of the conductive material due to excessive shear force, or failure to achieve the desired degree of dispersion.

Therefore, there remains a need for a method for preparing an expandable carbon nanotube powder that is capable of disaggregating a conductive material in a solvent-free state while minimizing cutting and achieving excellent dispersibility of the conductive material.

## DISCLOSURE OF THE INVENTION

### TECHNICAL PROBLEM

The present invention is designed to overcome the limitations described above, and thus, an aspect of the present invention provides a method for preparing an expandable carbon nanotube powder, which has low resistance and excellent lifespan characteristics when used as a conductive material, by disaggregating carbon nanotube aggregates in a solvent-free state to satisfy a specific rotor rotation speed range and a specific nozzle spray pressure range.

Another aspect of the present invention, which is designed to overcome the limitations described above, provides a dry electrode and a lithium secondary battery having improved resistance characteristics and lifespan characteristics due to excellent electrical conductivity and mechanical properties, including an expandable carbon nanotube powder prepared by the preparation method according to the present invention.

### TECHNICAL SOLUTION

[1] According to an aspect of the present invention, there is provided a method for preparing an expandable carbon nanotube powder, including disaggregating carbon nanotube aggregates via mutual collision in a disaggregation device in a solvent-free state, wherein the disaggregation is performed by the rotation of two or more rotors provided in the disaggregation device and by a high-pressure gas sprayed from a nozzle provided in the disaggregation device, the rotors have a rotation speed of 4100 rpm or greater, and the nozzle sprays the high-pressure gas at a pressure of 3.5 bar or greater.

[2] The present invention provides the method according to [1] above, wherein the disaggregation may be performed by swirling airflow generated by the rotation of the two or more rotors provided in the disaggregation device and by the high-pressure gas sprayed from the nozzle provided in the disaggregation device.

[3] The present invention provides the method according to [1] or [2] above, wherein the disaggregation may be performed by swirling airflow and impact force generated by the rotation of the two or more rotors provided in the disaggregation device and by the high-pressure gas sprayed from the nozzle provided in the disaggregation device.

[4] The present invention provides the method according to at least one of [1] to [3] above, wherein the rotors may have a rotation speed of 5000 rpm to 5400 rpm.

[5] The present invention provides the method according to at least one of [1] to [4] above, wherein the nozzle may spray the high-pressure gas at a pressure of 5.0 bar to 7.5 bar.

[6] The present invention provides the method according to at least one of [1] to [5] above, wherein the carbon nanotube aggregates may have a bulk density of 0.011 $g/cm^3$ to 0.900 $g/cm^3$.

[7] The present invention provides the method according to at least one of [1] to [6] above, wherein the carbon nanotube aggregates may have an average diameter of 100 $\mu$m to 600 $\mu$m.

[8] The present invention provides the method according to at least one of [1] to [7] above, wherein the carbon nanotube aggregates may have multi-walled carbon nanotube units.

[9] The present invention provides the method according to at least one of [1] to [8] above, wherein the multi-walled carbon nanotube units may have an average diameter of 5 nm to 200 nm.

[10] The present invention provides the method according to at least one of [1] to [9] above, wherein the multi-walled carbon nanotube units may have a BET specific surface area of 50 $m^2/g$ to 500 $m^2/g$.

[11] The present invention provides the method according to at least one of [1] to [10] above, wherein the multi-walled carbon nanotube units may have an average length of 0.1 $\mu$m to 100 $\mu$m.

[12] The present invention provides the method according to at least one of [1] to [11] above, wherein the expandable carbon nanotube powder prepared by the disaggregation may have a bulk density of 0.025 $g/cm^3$ or less.

[13] According to another aspect of the present invention, there is provided a dry electrode including the expandable carbon nanotube powder prepared by the preparation method according to at least one of [1] to [12] above.

[14] According to another aspect of the present invention, there is provided a lithium secondary battery including the dry electrode of [13] above.

### ADVANTAGEOUS EFFECTS

A method for preparing carbon nanotubes according to the present invention may form an expandable carbon nanotube powder having an expandable structure, by disaggregating carbon nanotube aggregates via mutual collision in a disaggregation device while controlling the rotation speed of a rotor and the spray pressure of a nozzle provided in the disaggregation device, thereby preventing excessive cutting of carbon nanotubes and achieving the desired degree of disaggregation.

In addition, due to the above-described characteristics, the expandable carbon nanotubes according to the present invention and a dry electrode including the same may form an excellent conductive network with excellent dispersibility in the dry electrode, thereby achieving excellent resistance characteristics and lifespan characteristics.

## BRIEF DESCRIPTION OF THE DRAWINGS

The accompanying drawings illustrate preferred embodiments of the present invention and together with the detailed description, serve to provide an explanation of the principle of the present invention, but not intended to limit the scope of the present invention thereto. Meanwhile, the shape, size, scale or proportion of elements in the drawings as stated herein may be exaggerated for clarity.

FIG. 1 is an SEM image of carbon nanotube aggregates used in Example 1;
FIG. 2 is an SEM image of an expandable carbon nanotube powder prepared in Example 1;
FIG. 3 is an SEM image of carbon nanotube aggregates used in Example 2; and
FIG. 4 is an SEM image of an expandable carbon nanotube powder prepared in Example 2.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In this specification, the term "volume cumulative average particle diameter $D_{50}$" indicates a particle diameter at a cumulative volume of 50% in a particle size distribution curve of particles. The $D_{50}$ may be measured, for example, by using a laser diffraction method. The laser diffraction method generally allows the measurement of a particle size ranging from a submicron level to a few mm and may produce highly repeatable and high-resolution results.

In this specification, the term "average particle diameter" indicates an arithmetic mean value of particle diameters which is calculated after measuring the particle diameters of at least 30 particles observed in a scanning electron microscope image when observed by using a scanning electron microscope with a field of view of 5,000 times to 20,000 times. In this case, the particle diameter indicates a diameter of the longest axis of the particle. Although measurement methods of the "volume cumulative average particle diameter $D_{50}$" and the "average particle diameter" are different, their values may be derived similarly, and the volume cumulative average particle diameter $D_{50}$ measured in a powder state may have a similar value within an error range to the average particle diameter observed in the scanning electron microscope image of an electrode after the powder is prepared into the electrode.

In this specification, the term "material mixture composition" indicates a mixture including an electrode active material as well as a binder and optionally a conductive material, which is physically mixed to form a uniform dispersion phase, where it may be a mixture of powders, as a product of a mixing process according to this specification, and may be one in which substantially no solvent is involved. Herein, the fact that substantially no solvent is involved indicates that no solvent or only a trace amount of solvent is added when mixing the material mixture composition.

In this specification, the term "mixed aggregate" indicates one in which the mixture of powders is converted into a dough-like aggregate by being bonded or connected to each other while the binder is fibrillized by applying a shear force to the material mixture composition, where it, as a product of a kneading process according to this specification, may have a solid content substantially close to 100% and may include a small amount of solvent in some cases.

In this specification, the term "powder for an electrode" is a material in a state in which the mixed aggregate is ground to form powder by reducing a size of particles, where it may indicate an electrode material in a form of powder which includes the electrode active material as well as the binder and optionally the conductive material.

In this specification, the term "electrode material mixture film" may be one which is prepared in a form of a free standing type single sheet using an "electrode material mixture" including the electrode active material, the conductive material, and the binder without a solvent involved, or may indicate an electrode material mixture layer in a state of being laminated on the current collector. In this specification, the term 'free standing type' indicates that it may maintain its form independently without relying on other members and may be moved or handled on its own. The electrode material mixture film may be formed through compression of the powder for an electrode, as will be described later. For example, the powder for an electrode may be integrated through compression to form a layered structure.

In this specification, the term "powder-sheeting film" indicates a film after a sheet form is formed through a powder-sheeting process in which the powder for an electrode first passes through a pressing roll in a roll-to-roll process (e.g., calendaring process) and before passing through a last pressing roll in the roll-to-roll process, where it may be a free standing type sheet, but may be a sheet with relatively weak self-supporting ability. Herein, the term 'powder-sheeting' may indicate that the powder for an electrode is formed into the form of a free standing type sheet by the pressing roll of the roll-to-roll process, and the term 'sheeting' is a process performed in a process of preparing the electrode material mixture film from the powder-sheeting film, where it may indicate a process of roll pressing the powder-sheeting film.

In this specification, the term "three-dimensional fiber network structure" may indicate a structure that may be formed through fibrillization of a binder during the process of forming a sheet from a material mixture composition including an electrode active material and a binder into an electrode material mixture film. Specifically, the three-dimensional fiber network structure may indicate various structures in which microfibers formed by the fibrillization of a binder form a skeleton and thereby serve as a support that enables an electrode material mixture film to be a self-supporting film. In this case, the electrode active material and optionally the conductive material may be accommodated in pores formed in the three-dimensional fiber network structure.

In this specification, porosity may be calculated by Equation A below.

$$[\text{Equation A}]$$

$$\text{Porosity (\%)} = \{1-(\text{electrode density/true density})\} \times 100$$

In Equation A above, the true density is calculated density derived from density and mass ratio of each component material constituting an electrode material mixture film, assuming that no pores are included, and the electrode density is measured density of an electrode material mixture film which is measured by taking a certain size of the electrode material mixture film.

Herein, the term "specific surface area ($m^2/g$)" is measured through a BET method, and specifically may be calculated from an amount of nitrogen gas adsorbed at a liquid nitrogen temperature (77 K) using BELSORP-mino II from BEL JAPAN, INC.

Unlike a wet electrode in which an electrode active material, a binder, and/or a conductive material are mixed in a solvent, in the preparation of a dry electrode, an electrode active material, a fibrillizable binder, and/or a conductive material are mixed in a solvent-free state, causing poor dispersibility of the conductive material. In this case, a method of first dispersing a conductive material to improve the dispersibility of the conductive material, and then mixing an electrode active material, a fibrillizable binder, and/or the conductive material has been suggested, but the typical pre-dispersion of the conductive material induces excessive cutting of the conductive material due to excessive shear force in a solvent-free state, or failure to achieve the desired degree of dispersion.

The inventors of the present invention have conducted continuous research to address the issues described above, and have discovered that when carbon nanotube aggregates are disaggregated through mutual collision and the disaggregation is controlled to satisfy specific conditions, an expandable carbon nanotube powder having an expandable structure with a sufficiently low bulk density and no excessive cutting may be formed, thereby achieving excellent resistance and lifespan characteristics, thus completing the present invention.

## Method for Preparing Expandable Carbon Nanotube Powder

A method for preparing an expandable carbon nanotube powder according to the present invention includes disaggregating carbon nanotube aggregates via mutual collision in a disaggregation device in a solvent-free state, where the disaggregation is performed by the rotation of two or more rotors provided in the disaggregation device and by a high-pressure gas sprayed from a nozzle provided in the disaggregation device, the rotors have a rotation speed of 4100 rpm or greater, and the nozzle sprays a high-pressure gas at a pressure of 3.5 bar or greater.

Unlike wet electrodes, which are dispersed and/or mixed in a solvent, dry electrodes, when prepared, involve dispersing and/or mixing a conductive material (e.g., carbon nanotubes) in a solvent-free state. The process of dispersing and/or mixing in a solvent-free state prevents buffering and dispersing actions of a solvent, resulting in excessive shear force, which may lead to excessive cutting of the conductive material or failure to achieve the desired degree of disaggregation. In particular, when attempting to disaggregate carbon nanotubes in a solvent-free state, aggregation of carbon nanotubes due to van der Waals force is induced, making disaggregation even more difficult. In addition, because carbon nanotubes have a linear shape, when dispersion and/or mixing is performed in a solvent-free state, excessive shear force may easily cause pulverization of the carbon nanotubes.

Accordingly, the present invention provides a method for preparing an expandable carbon nanotube powder having excellent dispersibility, by disaggregating carbon nanotube aggregates via mutual collision in a solvent-free state while controlling the disaggregation conditions to satisfy specific conditions, thereby forming an expandable structure without excessive cutting.

Specifically, devices such as jaw crushers and hammer crushers, which may apply pulverization force with strong shear force in a solvent-free state, perform pulverization that causes damage to carbon nanotubes, and thus hardly generate carbon nanotubes having an expandable structure. However, in the present invention, carbon nanotubes having an expandable structure may be prepared via mutual collision in a solvent-free state to minimize cutting while performing disaggregation with an appropriate force, thereby achieving excellent resistance characteristics and lifespan characteristics when preparing a powder for electrodes and a dry electrode including the same thereafter.

In particular, the expandable carbon nanotube powder is different from carbon nanotubes aggregated at a high density or high-density carbon nanotube aggregates generally used in large-scale industries, and involves forming a kind of pop-type having an expandable structure without excessive cutting of carbon nanotubes. Desirably, unlike carbon nanotubes dispersed using an aqueous dispersion, the expandable carbon nanotube powder involves forming a pop-type having an expandable carbon nanotube structure in a dry, solvent-free state without excessive cutting.

The pop-type indicates a form in which carbon nanotube aggregates aggregated at a high density are disaggregated and visually separated in a loose manner, resulting in increased space between carbon nanotubes increases, and connections between carbon nanotubes become loose, resulting in increased overall volume. For example, the expandable structure may form a kind of honeycomb structure having reduced density between carbon nanotubes, thereby exposing the surface of more carbon nanotubes to the outside.

In this case, the expandable carbon nanotube powder having a pop-type may be achieved through various methods, but desirably, achieved by controlling characteristics of carbon nanotubes, such as shape, diameter, length, and/or number of walls, or controlling conditions for disaggregating the carbon nanotubes.

Therefore, when preparing a dry electrode thereafter, including expandable carbon nanotubes as a conductive material may be desirable in an aspect that a well-dispersed conductive network is formed while the continuity of the conductive network is maintained, thereby achieving excellent mechanical strength and resistance properties. For example, the expandable carbon nanotubes having an expandable structure, that are properly dispersed and have minimal cutting, may maintain excellent dispersibility while minimizing cutting during the subsequent dry electrode preparation process, thereby forming an excellent conductive network between and/or within electrode active materials in an electrode material mixture film, and sufficiently preventing conductive material aggregation that reduces conductive effects, leading to excellent resistance characteristics and lifespan characteristics.

According to an embodiment of the present invention, the carbon nanotube aggregates may be aggregates in which carbon nanotubes are aggregated at a high density, for example, bundle-type carbon nanotubes or entangled-type carbon nanotubes.

Hereinafter, the method for preparing an expandable carbon nanotube powder according to the present invention will be described in detail.

The method for preparing expandable carbon nanotubes according to the present invention includes disaggregating carbon nanotube aggregates via mutual collision in a disaggregation device in a solvent-free state, where the disaggregation is performed by the rotation of two or more rotors provided in the disaggregation device and by a high-pressure gas sprayed from a nozzle provided in the disaggregation device. Desirably, the disaggregation may be performed by swirling airflow generated by the rotation of two or more rotors provided in the disaggregation device and a high-pressure gas sprayed from a nozzle provided in the disaggregation device, and more desirably, the disaggregation may be performed by swirling airflow and impact force generated by the rotation of two or more rotors provided in the disaggregation device and a high-pressure gas sprayed from a nozzle provided in the disaggregation device.

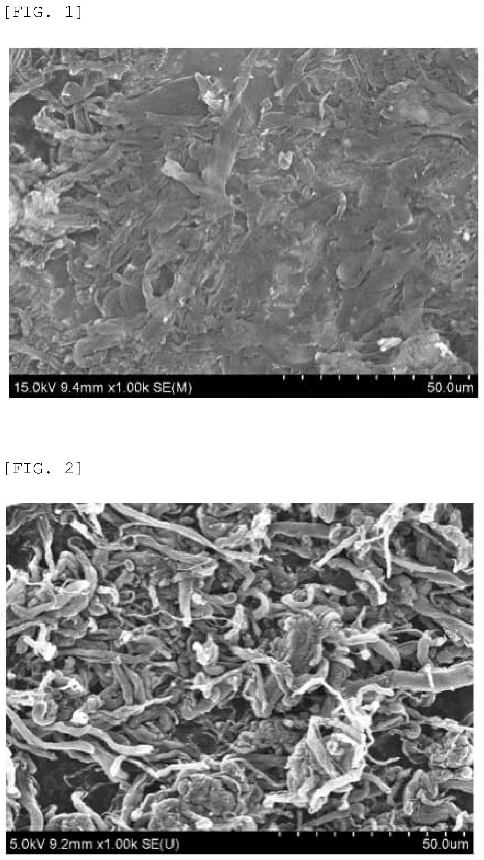

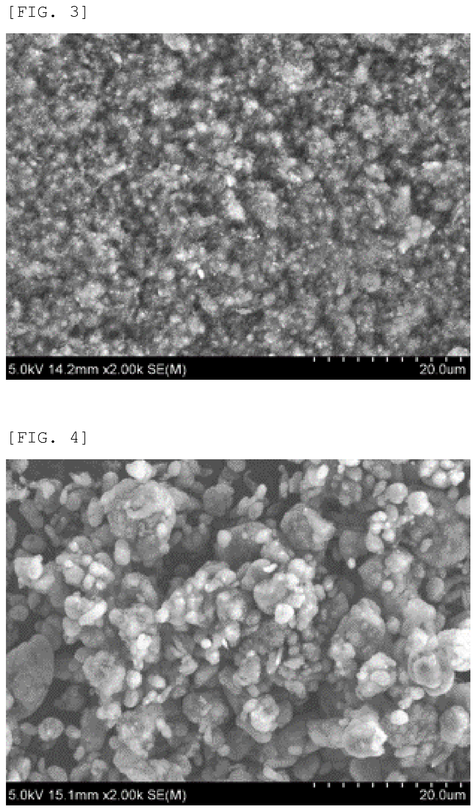

Unlike pulverization methods that apply excessive and concentrated impact, such as ball milling, the preparation method involves disaggregating carbon nanotube aggregates via mutual collision. Accordingly, excessive cutting and aggregation of carbon nanotube aggregates are prevented, allowing the carbon nanotube aggregates of FIGS. 1 and 3 to be transformed into expandable carbon nanotube powders having an expandable structure, as shown in FIGS. 2 and 4. The forming of an expandable carbon nanotube powder having an expandable structure as described above, when preparing a powder for an electrode and/or a dry electrode thereafter, may allow the carbon nanotubes to appropriately connect electrode active material particles and to form an excellent conductive network, and to exhibit excellent dispersibility even in a solvent-free state, thereby achieving excellent resistance characteristics and lifespan characteristics.

When the above conditions are satisfied, it may be desirable in that the degree of disaggregation may be increased by strengthening the collision between carbon nanotube aggregates due to swirling airflow and high-pressure gas, and by causing the carbon nanotube aggregates to collide with the rotor due to impact force by the rotor and/or pressure sprayed from the nozzle.

Meanwhile, disaggregating carbon nanotube aggregates via mutual collision using only high-pressure gas sprayed from a nozzle provided in a disaggregation device without rotor rotation results in low disaggregation efficiency due to no swirling airflow or impact force by rotor rotation, and provides no energy effectively disaggregate aggregation by van der Waals force between or within carbon nanotube aggregates aggregated at a high density, thereby failing to form an expandable carbon nanotube powder.

In the method for preparing an expandable carbon nanotube powder according to the present invention, the rotors have a rotation speed of 4100 rpm or greater. Desirably, the rotors may have a rotation speed of 4200 rpm or greater, 4300 rpm or greater, 4400 rpm or greater, 4500 rpm or greater, 4600 rpm or greater, 4700 rpm or greater, 4800 rpm or greater, 4900 rpm or greater, or 5000 rpm or greater, a rotation speed of 7000 rpm or less, 6900 rpm or less, 6800 rpm or less, 6700 rpm or less, 6600 rpm or less, 6500 rpm or less, 6400 rpm or less, 6300 rpm or less, 6200 rpm or less, 6100 rpm or less, 6000 rpm or less, 5900 rpm or less, 5800 rpm or less, 5700 rpm or less, 5600 rpm or less, 5500 rpm or less, or 5400 rpm or less, and a rotation speed of 5000 rpm to 5400 rpm. When the rotors have a rotation speed of less than 4,100 rpm, the van der Waals force of carbon nanotube aggregates may not be overcome, resulting in aggregation of the carbon nanotube aggregates, which prevents the preparation of an expandable carbon nanotube powder having an expandable structure. Therefore, when the above range is satisfied, excessive cutting of the carbon nanotube aggregates may not occur, and a sufficiently disaggregated expandable carbon nanotube powder having an expandable structure may be prepared, thereby achieving excellent resistance characteristics and lifespan characteristics.

In the method for preparing an expandable carbon nanotube powder according to the present invention, the nozzle sprays high-pressure gas at a pressure of 3.5 bar or greater. The nozzle may desirably spray high-pressure gas at a pressure of 3.6 bar or greater, 3.7 bar or greater, 3.8 bar or greater, 3.9 bar or greater, 4.0 bar or greater, 4.1 bar or greater, 4.2 bar or greater, 4.3 bar or greater, 4.4 bar or greater, 4.5 bar or greater, 4.6 bar or greater, 4.7 bar or greater, 4.8 bar or greater, 4.9 bar or greater, or 5.0 bar or greater, and may spray high-pressure gas at a pressure of 7.5 bar or less. The nozzle may more desirably spray high-pressure gas at a pressure of 5.0 bar to 7.5 bar. The nozzle is a nozzle that sprays gas and/or fluid capable of generating pressure, such as water vapor, air, steam, nitrogen, and/or argon gas, and may disaggregate carbon nanotube aggregates via collisions between carbon nanotube aggregates or between carbon nanotube aggregates and the rotor. When the nozzle sprays high-pressure gas at a pressure of less than 3.5 bar, the carbon nanotube aggregates are not subjected to enough pressure to overcome the van der Waals force, leading to failure to form an expandable carbon nanotubes having an expandable structure. Therefore, when the above range is satisfied, excessive cutting of the carbon nanotube aggregates may not occur, and a sufficiently disaggregated expandable carbon nanotube powder having an expandable structure may be prepared, thereby achieving excellent resistance characteristics and lifespan characteristics.

According to an embodiment of the present invention, the disaggregation device is not particularly limited as long as it is capable of applying a moderate amount of force, but may be, for example, a Galaxy jet mill (JEM Corporation).

Hereinafter, the carbon nanotube aggregates used in the preparation method according to the present invention will be described in more detail.

Among the carbon nanotube aggregates, bundle-type carbon nanotubes indicate a form in which carbon nanotubes are aggregated into a bundle due to interactions between carbon nanotube units, rather than a form in which carbon nanotubes are present as a single-strand unit, and may desirably indicate a form in which carbon nanotube units are attached or entangled due to their mutual interaction.

According to an embodiment of the present invention, the carbon nanotube aggregates may have a bulk density of $0.011 \text{ g/cm}^3$ to $0.900 \text{ g/cm}^3$, the carbon nanotube aggregates may desirably have a bulk density of $0.020 \text{ g/cm}^3$ to $0.500 \text{ g/cm}^3$, and the carbon nanotube aggregates may more desirably have a bulk density of $0.030 \text{ g/cm}^3$ to $0.150 \text{ g/cm}^3$. When the above range is satisfied, the carbon nanotube aggregates may be suitable for achieving the degree of disaggregation according to the preparation method of the present invention.

The bulk density may be measured by filling an expandable carbon nanotube powder into a container of a known specific volume, measuring the weight, and then converting the result to density.

According to an embodiment of the present invention, the carbon nanotube aggregate may have a volume cumulative average particle diameter of 100 μm to 600 μm, desirably 200 μm to 580 μm, and more desirably 300 μm to 560 μm. When the above range is satisfied, an appropriate number of carbon nanotube units are aggregated, and thus the carbon nanotube aggregates may be suitable for achieving the degree of disaggregation according to the preparation method of the present invention. The volume cumulative average particle diameter is not limited as long as it is measured by a typical method, such as by using a scanning electron microscope or a laser diffraction method, but is desirably measured through a volume cumulative particle diameter distribution using a laser diffraction method.

The carbon nanotube aggregates may include carbon nanotube units. The graphite sheet of the carbon nanotubes has a cylindrical shape with a nano-sized diameter and has a $sp^2$ bonding structure. In this case, according to the rolling angle and structure of the graphite sheet, conductor or semiconductor properties may be shown. The carbon nanotubes may be classified into single-walled carbon nanotubes (SWCNT) units, double-walled carbon nanotubes (DWCNT) units, and multi-walled carbon nanotubes (MWCNT) units according to the number of bonds forming walls.

According to an embodiment of the present invention, the carbon nanotube aggregates may include multi-walled carbon nanotube units. When the carbon nanotube units are single-walled carbon nanotube units or double-walled carbon nanotube units, battery manufacturing costs may be excessively high, which may degrade processability, and the carbon nanotube units may be present in an excessively aggregated state, which may make disaggregation difficult. Conversely, when the carbon nanotube units are multi-walled carbon nanotube units, manufacturing costs are relatively low, and mutual aggregation is not excessive, which allows for appropriate disaggregation and results in excellent processability.

In particular, multi-walled carbon nanotube units are highly defective in structure due to the mechanism of node growth (having nodes due to defects occurring during a growth process instead of being smoothly linear). Accordingly, during a disaggregation process, the multi-walled carbon nanotube units are more easily cut, and the multi-walled carbon nanotube units cut short by π-π stacking due to a carbon surface bonding structure (sp2) are likely to aggregate with each other. However, the disaggregation performed through the preparation method according to the present invention may prevent the multi-walled carbon nanotube units from aggregating, and also prevent electrical conductivity from being degraded due to the shortening of the carbon nanotube units by excessive cutting, thereby maximizing the effects of the present invention.

According to an embodiment of the present invention, the multi-walled carbon nanotube units may have an average diameter of 5 nm to 200 nm, desirably 5 nm or greater, 6 nm or greater, 7 nm or greater, 8 nm or greater, 9 nm or greater, or 10 nm or greater, an average diameter of 200 nm or less, 180 nm or less, 160 nm or less, 140 nm or less, 120 nm or less, 100 nm or less, 80 nm or less, 60 nm or less, or 50 nm or less, and more desirably, an average diameter of 10 nm to 50 nm. When the above range is satisfied, dispersion is easy, and thus conductivity may be improved when subsequently using the multi-walled carbon nanotube units as a conductive material. The average diameter corresponds to an average value of the diameters of the top 100 single-walled carbon nanotube units having a large diameter and the bottom 100 single-walled carbon nanotube units, observed through SEM or TEM.

According to an embodiment of the present invention, the multi-walled carbon nanotube units may have a BET specific surface area of 50 $m^2$/g to 500 $m^2$/g, desirably 100 $m^2$/g to 400 $m^2$/g, and more desirably 150 $m^2$/g to 300 $m^2$/g. When the above specific surface area range is satisfied, appropriate dispersion of the multi-walled carbon nanotube units is achievable, thereby maintaining manufacturing processability. The BET specific surface area may be measured using a nitrogen adsorption BET method.

According to an embodiment of the present invention, the multi-walled carbon nanotube units may have an average length of 0.1 μm to 100 μm, desirably 0.1 μm to 50 μm, and more desirably 0.1 μm to 3 μm. When the above range is satisfied, appropriate dispersion of the multi-walled carbon nanotube units is achievable, and when subsequently using the multi-walled carbon nanotube units as a conductive material, the formation of a conductive network may be maximized. The average length corresponds to an average value of the lengths of the top 100 single-walled carbon nanotube units having a large length and the bottom 100 single-walled carbon nanotube units, observed through SEM or TEM.

Meanwhile, according to an embodiment of the present invention, the expandable carbon nanotube powder may have an expandable structure, and desirably, the bundle-type expandable carbon nanotube powder may be disaggregated with an appropriate force that is neither too little nor too much in a solvent-free state, allowing the expandable carbon nanotube powder to have an expandable structure. When the expandable carbon nanotube powder forms an expandable structure, the expandable carbon nanotube powder may have an appropriate bulk density, be easily dispersed when subsequently used as a conductive material, and have a large contact area between an electrode active material and the expandable carbon nanotube powder, thereby forming an appropriate conductive network.

According to an embodiment of the present invention, the expandable carbon nanotube powder prepared by the disaggregation may have a bulk density of 0.025 $g/cm^3$ or less, and desirably 0.001 $g/cm^3$ or greater, 0.025 $g/cm^3$ or less, 0.024 $g/cm^3$ or less, 0.023 $g/cm^3$ or less, 0.022 $g/cm^3$ or less, 0.021 $g/cm^3$ or less, 0.020 $g/cm^3$ or less, 0.019 $g/cm^3$ or less, 0.018 $g/cm^3$ or less, 0.017 $g/cm^3$ or less, 0.016 $g/cm^3$ or less, 0.015 $g/cm^3$ or less, 0.014 $g/cm^3$ or less, 0.013 $g/cm^3$ or less, 0.012 $g/cm^3$ or less, 0.011 $g/cm^3$ or less, 0.010 $g/cm^3$ or less, 0.009 $g/cm^3$ or less, or 0.008 $g/cm^3$ or less, and more desirably 0.001 $g/cm^3$ to 0.008 $g/cm^3$. When the above range is satisfied, evidence of the expandable carbon nanotube powder having appropriately formed an expandable structure is provided, and thus, when subsequently used as a conductive material, the expandable carbon nanotube powder may be easily dispersed to form an appropriate conductive network.

## Dry Electrode

A dry electrode according to the present invention includes an expandable carbon nanotube powder prepared through the preparation method according to the present invention. Desirably, the dry electrode according to the present invention may include a current collector, an electrode material mixture film formed on the current collector, where the electrode material mixture film includes an electrode active material, a conductive material, and a binder having a three-dimensional fiber network structure, and the conductive material includes the expandable carbon nanotube powder according to the present invention.

The expandable carbon nanotube powder according to the present invention may exhibit excellent effects when used as a conductive material in the electrode material mixture film included in the dry electrode. For example, an expandable carbon nanotube powder that is properly disaggregated and has minimal cutting, may maintain excellent dispersibility while minimizing cutting during the subsequent dry electrode preparation process, thereby forming an excellent conductive network between and/or within electrode active materials in an electrode material mixture film, and sufficiently preventing conductive material aggregation that reduces conductive effects, leading to excellent resistance characteristics and lifespan characteristics.

In particular, the expandable carbon nanotube powder of the present invention is disaggregated in a solvent-free state, and thus environmental friendliness, processability, resistance, and lifespan characteristics may be further maximized when the expandable carbon nanotube powder is included in the dry electrode.

In addition, the dry electrode according to the present invention may be prepared by stacking the electrode material mixture film on one side or both sides of a current collector and laminating the resulting product.

The lamination may involve attaching the electrode material mixture film onto the current collector by rolling. The lamination may be performed by a roll press method using a lamination roller, and, in this case, the lamination roller may be maintained at a temperature of 20°C to 200°C.

The expandable carbon nanotube powder according to the present invention is described above and will not be further provided, and the current collector and the electrode material mixture film will be described in detail.

(Current Collector)

In a case in which the dry electrode is a positive electrode, the current collector is not particularly limited so long as it has conductivity without causing chemical changes in batteries. For example, stainless steel, aluminum, nickel, titanium, fired carbon, or aluminum or stainless steel that is surface-treated with one of carbon, nickel, titanium, silver, or the like may be used as the current collector.

The current collector may have a thickness of 8 $\mu$m to 500 $\mu$m, but the thickness of the current collector is not limited thereto. In addition, fine irregularities may be formed on a surface of the current collector to improve the adhesion of the electrode material mixture film.

In a case in which the dry electrode is a negative electrode, the current collector is not particularly limited so long as it has high conductivity without causing changes in batteries, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used.

The current collector may typically have a thickness of 3 $\mu$m to 500 $\mu$m, and as in the case where the dry electrode is used as a positive electrode, fine irregularities may be formed on a surface of the current collector to improve the adhesion of the electrode material mixture film.

The current collector may be entirely or partially coated with a conductive primer to lower surface resistance and improve adhesion. In this case, the conductive primer may include a conductive material and a binder, and the conductive material is not limited as long as the material is conductive, but may be, for example, a carbon-based material. The binder may include a fluorine-based binder (including PVDF and PVDF copolymer), an acryl-based binder, and an aqueous binder, which are soluble in solvents.

(Electrode Material Mixture Film)

The electrode material mixture film according to the present invention includes an electrode active material, a conductive material, and a binder having a three-dimensional fiber network structure, where the conductive material includes the carbon nanotubes according to the present invention.

1) Electrode Active Material

The electrode material mixture film includes an electrode active material

There is no particular limitation on the electrode active material as long as it is a commonly used electrode active material, and, for example, the electrode active material may be a positive electrode active material or a negative electrode active material.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may be lithium-manganese-based oxide (e.g., $LiMnO_2$, $LiMn_2O_4$, and the like), lithium-cobalt-based oxide (e.g., $LiCoO_2$ and the like), lithium-nickel-based oxide (e.g., $LiNiO_2$ and the like), lithium-nickel-manganese-based oxide (e.g., $LiNi_{1-Y}Mn_YO_2$ (where $0<Y<1$), $LiMn_{2-Z}Ni_ZO_4$ (where $0<Z<2$), and the like), lithium-nickel-cobalt-based oxide (e.g., $LiNi_{1-Y1}Co_{Y1}O_2$ (where $0<Y1<1$ and the like), lithium-manganese-cobalt-based oxide (e.g., $LiCo_{1-Y2}Mn_{Y2}O_2$ (where $0<Y2<1$), $LiMn_{2-Z1}Co_{Z1}O_4$ (where $0<Z1<2$), and the like), lithium-nickel-manganese-cobalt-based oxide (e.g., $Li(Ni_pCo_qMn_r)O_2$ (where $0<p<1$, $0<q<1$, $0<r<1$, and $p+q+r=1$) or $Li(Ni_{p1}Co_{q1}Mn_{r1})O_4$ (where $0<p1<2$, $0<q1<2$, $0<r1<2$, and $p1+q1+r1=2$), and the like), or lithium-nickel-cobalt-transition metal (M) oxide (e.g., $Li(Ni_{p2}Co_{q2}Mn_{r2}M_{s2})O_2$ (where M is selected from the group consisting of Al, Fe, V, Cr, Ti, Ta, Mg, and Mo, and p2, q2, r2, and s2 are each an atomic fraction of independent elements, wherein $0<p2<1$, $0<q2<1$, $0<r2<1$, $0<s2<1$, and $p2+q2+r2+s2=1$ are satisfied), lithium iron phosphate (e.g.,

$Li_{1+a}Fe_{1-x}M_x(PO_{4-b})X_b$ (where M is at least one selected from Al, Mg, and Ti, X is at least one selected from F, S and N, and $-0.5 \leq a \leq 0.5$, $0 \leq x \leq 0.5$, and $0 \leq b \leq 0.1$ are satisfied), and the like, and any one thereof or a compound of two or more thereof may be included.

Among these materials, in terms of the improvement of capacity characteristics and stability of the battery, the lithium metal oxide may be $LiCoO_2$, $LiMnO_2$, $LiNiO_2$, lithium nickel manganese cobalt oxide (e.g., $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$), lithium nickel cobalt aluminum oxide (e.g., $Li(Ni_{0.8}Co_{0.15}Al_{0.05})O_2$, etc.), lithium nickel cobalt manganese aluminum oxide (e.g., $Li(Ni_{0.86}Co_{0.05}Mn_{0.07}Al_{0.02})O_2$), or lithium iron phosphate (e.g., $LiFePO_4$), and any one thereof or a mixture of two or more thereof may be used. More specifically, in terms of being able to prepare an electrode material mixture film in a form of a uniform and stable film, the electrode active material may include lithium nickel cobalt manganese aluminum oxide.

More desirably, the electrode active material may include a phosphorus oxide represented by Formula 1 below.

[Formula 1]     $Li_{1+x}[Fe_{1-a-b}Mn_aM^1_b]PO_4$

In Formula 1 above, $M^1$ includes at least one element selected from the group consisting of Al, Mg, Ni, Co, Ti, Ga, Cu, V, Mo, Nb, W, Zr, Ce, In, Zn, and Y, and x, a, and b satisfy $-0.5 \leq x \leq 0.5$, $0 \leq a \leq 0.8$, and $0 \leq b \leq 0.1$. In a case in which the above conditions are satisfied, it may be desirable in terms of being able to achieve excellent economic efficiency and stability.

The negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of Cu, Ni, sodium (Na), potassium (K), rubidium (Rb), cesium (Cs), francium (Fr), beryllium (Be), Mg, calcium (Ca), strontium (Sr), silicon (Si), antimony (Sb), lead (Pb), In, Zn, barium (Ba), radium (Ra), germanium (Ge), Al, and tin (Sn) or an alloy of lithium and the metal may be used.

One selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $Li_xFe_2O_3$ ($0 \leq x \leq 1$), $Li_xWO_2$ ($0 \leq x \leq 1$), and $Sn_xMe_{1-x}Me'_yO_z$ (Me:Mn, Fe, Pb, or Ge; Me':Al, boron (B), P, Si, Groups I, II, and III elements of the periodic table, or halogen; $0 < x \leq 1$; $1 \leq y \leq 3$; $1 \leq z \leq 8$) may be used as the metal composite oxide.

The material, which may be doped and undoped with lithium, may include Si, $SiO_x$ ($0 < x \leq 2$), a Si-Y alloy (where Y is an element selected from the group consisting of alkali metal, alkaline earth metal, a Group 13 element, a Group 14 element, transition metal, a rare earth element, and a combination thereof, and is not Si), Sn, $SnO_2$, and Sn-Y (where Y is an element selected from the group consisting of alkali metal, alkaline earth metal, a Group 13 element, a Group 14 element, transition metal, a rare earth element, and a combination thereof, and is not Sn), and a mixture of $SiO_2$ and at least one thereof may also be used. The element Y may be selected from the group consisting of Mg, Ca, Sr, Ba, Ra, scandium (Sc), Y, Ti, Zr, hafnium (Hf), rutherfordium (Rf), V, Nb, Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B, Al, Ga, Sn, In, Ge, P, arsenic (As), Sb, bismuth (Bi), S, selenium (Se), tellurium (Te), polonium (Po), and a combination thereof.

The transition metal oxide may include lithium-containing titanium composite oxide (LTO), vanadium oxide, and lithium vanadium oxide.

According to an embodiment of the present invention, the electrode active material may be included in an amount of 80 to 99 parts by weight, and desirably 90 to 99 parts by weight, with respect to a total weight of the electrode material mixture film. When the above range is satisfied, it is desirable in terms of increased electrode capacity and energy density.

2) Conductive Material

The electrode material mixture film includes a conductive material, and the conductive material includes the expandable carbon nanotube powder according to the present invention.

According to an embodiment of the present invention, the conductive material may be included in an amount of 0.1 to 10 parts by weight, and desirably 0.1 to 5.0 parts by weight, with respect to a total weight of the electrode material mixture film. When the above range is satisfied, it is desirable in that an excellent conductive path may be formed while excellent capacity density may be achieved.

3) Binder

The electrode material mixture film includes a binder having a three-dimensional fiber network structure.

The binder serves to form a three-dimensional fiber network structure that allows the electrode material mixture film to be self-supporting. The binder is not specifically limited, as long as it is a fibrillizable material, that is, one which through fibrillization may form a three-dimensional fiber network structure within the electrode material mixture film and provide pores capable of accommodating an electrode active material and optionally a conductive material.

The fibrillization of the binder indicates a process of finely dividing a polymer applied as a binder, and may be performed, for example, by applying mechanical shear force or the like, and consequently, the surface is loosened and fibrillized, forming a plurality of fine fibers, and thereby including a three-dimensional fiber network structure.

The fibrillizable binder is not particularly specified as long as it may be fibrillized, and the fibrillization refers to a treatment of finely dividing a polymer. For example, the fibrillization may be performed using a mechanical shear force or the like, and surfaces of the polymer fibers thus fibrillized are loose to generate a large number of fine fibers (fibrils). The fibrillizable binder may desirably include at least one selected from the group consisting of polytetrafluoroethylene (PTFE) and polyolefin, may more desirably polytetrafluoroethylene (PTFE), and may even more desirably be polytetrafluoroethylene (PTFE). When the conditions described above are satisfied, excellent conductive dispersibility may be achieved with appropriately reduced resistance.

Meanwhile, the polytetrafluoroethylene (PTFE) may be included in an amount of 60 wt% or greater with respect to a total weight of the binder. In this case, the binder may further include one or more of polyethylene oxide (PEO), polyvinylidene fluoride (PVdF), polyvinylidene fluoride-cohexafluoropropylene (PVdF-HFP), and a polyolefin-based binder.

According to an embodiment of the present invention, the fibrillizable binder may be included in an amount of 0.1 to 10 parts by weight, and desirably 0.1 to 5.0 parts by weight, with respect to a total weight of the electrode material mixture film. When the above range is satisfied, it is desirable in that a degree of fibrillization appropriate for preparing a self-supporting sheet may be achieved with excellent resistance characteristics.

Meanwhile, the dry electrode according to the present invention may be prepared by including step S1 of mixing an electrode active material, a conductive material, and a fibrillizable binder to obtain a material mixture composition, step S2 of kneading the material mixture composition while applying shear force to form a mixed aggregate, step S3 of pulverizing the mixed aggregate to prepare a powder for an electrode, and step S4 of sheet-forming the powder for an electrode into an electrode material mixture film by roll pressing.

(Step S1)

This is a step of mixing an electrode active material, a conductive material, and a binder to form a material mixture composition. The electrode active material, the conductive material, and the binder are described above and thus specific descriptions thereof will not be provided again. In this case, the mixing is performed such that the electrode active material, the conductive material, and the binder are uniformly distributed, and the components are mixed in powder form, and thus the mixing is not limited and may be performed through various methods as long as simple mixing is allowed. However, in the present invention, a dry electrode with no use of a solvent is prepared, and thus the mixing may be performed through dry mixing, and the materials described above may be added to a device such as a mixer or a blender, and mixed.

In this case, the mixing may be performed in a mixer at 100 rpm to 5000 rpm for 1 to 60 minutes. Desirably, the mixing may be performed in a mixer at 500 rpm to 4000 rpm for 3 to 45 minutes, and more desirably at 100 rpm to 3000 rpm for 5 to 30 minutes. When the mixing is performed within the above range, the materials may be uniformly mixed, thereby improving battery performance.

The control conditions of the mixing process may determine how uniformly and well the binder is fibrillized in the subsequent kneading process of step S2, and when the mixing is not uniformly performed, even in a case where fibrillization occurs uniformly, non-uniform portions may be present on the entire side of a film, and thus, it may be desirable to perform the mixing process under the conditions described above.

(Step S2)

Next, a fibrillization process of binder using a binder capable of forming a three-dimensional fiber network structure may be performed on the material mixture composition obtained from the mixing, thereby preparing a mixed aggregate. Desirably, kneading the material mixture composition while applying shear force to form a mixed aggregate may be performed.

The fibrillization process may be performed, for example, through mechanical milling or kneading, and is not particularly limited as long as the process is generally performed, but may desirably be performed through high temperature-low shear kneading, and may be performed, for example, through a kneading machine such as a kneader. Through this kneading, the binder capable of forming a three-dimensional fiber network structure is fibrillized, and accordingly, the electrode active material and conductive material powders are combined or connected to form a mixed aggregate with a solid content of 100%.

The kneading may be performed at a rate of 10 rpm to 100 rpm, and specifically may be performed at a rate of 20 rpm to 70 rpm. In addition, the kneading may be performed for 1 to 120 minutes, and specifically for 2 to 60 minutes. When the above range is satisfied, appropriate fibrillization may be performed, allowing the binder to be uniformly fibrillized overall and to form a structurally stable three-dimensional fiber network structure.

In addition, the kneading may be performed at high temperature and normal pressure or higher, and specifically, may be performed at pressure higher than normal pressure.

More specifically, the kneading may be performed at 50°C to 230°C, desirably at 90°C to 200°C. When the kneading is performed at a high temperature in the above range, fibrillization of the binder and lump formation through kneading may be well performed, and breakage of the binder subjected to fibrillization may be appropriately prevented.

In addition, the kneading may be performed at or above atmospheric pressure, specifically at a pressure of 1 atm to 3 atm. When the kneading is performed within the above range, breakage of the binder subjected to fibrillization may be appropriately prevented, and an aggregate may be prevented from having an excessively high density.

That is, according to the present invention, when a high temperature-low shear mixing process is performed at high temperature and normal pressure or higher instead of high shear mixing, the effect intended by the present invention may be achieved.

(Step S3)

Next, pulverizing the mixed aggregate prepared through the kneading to obtain a powder for an electrode may be performed. Desirably, pulverizing the mixed aggregate to prepare a powder for an electrode may be performed.

The mixed aggregate prepared through the kneading may be directly pressed and molded into a sheet (sheeting, for example, calendering process), but in this case, the mixed aggregate may be pressed at strong pressure and high temperature to form a thin film, and accordingly, the film may have an excessively high density or a uniform film is not obtainable. Therefore, the mixed aggregate prepared as above is pulverized to prepare a powder for an electrode.

An instrument used for the pulverization is not particularly limited, but the pulverization may desirably be performed using an instrument such as a blender or grinder.

The pulverizing may be performed at a rate of 1000 rpm to 15000 rpm for 1 to 30 minutes, desirably at a rate of 3000 rpm to 10000 rpm for 5 to 20 minutes. When the pulverizing is performed within the above range, sufficient pulverization may be achieved to prepare powder of an appropriate size for forming a film, and a large amount of fine powder may not be generated in the mixed aggregate.

An average particle diameter of the powder for an electrode may be in a range of 10 μm to 3,000 μm, specifically 50 μm to 1,500 μm, and more specifically 100 μm to 700 μm. When the above range is satisfied, an electrode material mixture film having uniform thickness and density may be formed, and excellent electrode material mixture film physical properties may be obtained.

Meanwhile, the powder for an electrode may, although not essential, further include fillers to suppress expansion of the electrode. The filler is not particularly limited as long as it is a fibrous material without causing chemical changes in batteries, and may be at least one selected from, for example, olefin-based polymers such as polyethylene and polypropylene; fibrous materials such as glass fiber and carbon fiber.

(Step S4)

Next, the powder for an electrode is sheet-formed into an electrode material mixture film by roll pressing. Desirably, step S4 may be a process of preparing an electrode material mixture film in the form of a self-standing sheet by thermocompressing the powder for an electrode using pressing rolls in a roll-to-roll process including two or more pairs of pressing rolls.

The roll-to-roll process may include a roll press unit where roll pressing is performed, and the roll press unit may be one in which a pair of pressing rolls are disposed to face each other, or one in which a plurality of pressing rolls are continuously disposed, and the pressing rolls may be continuously disposed in plurality in the roll press unit. When the plurality of pressing rolls are continuously disposed, the temperatures and tip speed ratio (the rotation speed ratio of a pair of rolls) of each roll may be the same or different.

According to an embodiment of the present invention, the temperature of the pressing roll may be 50°C to 200°C, desirably the temperature of the calendar roll may be 50°C to 180°C, and more desirably the temperature of the calendar roll may be 60°C to 150°C. When the above ranges are satisfied, an electrode material mixture film with excellent processability and uniformity may be obtained.

The rotation speed ratio of the pressing rolls provided in the roll-to-roll process of step S4 may be appropriately adjusted independently within a range of 1:1 to 1:10. In addition, the prepared electrode material mixture film may be put back into the roll press unit and thermocompressed 1 to 10 times to be adjusted to have an appropriate thickness.

According to an embodiment of the present invention, step S4 may include step S4a of pre-sheeting the powder for an electrode to obtain a powder-sheeting film, and step S4b of sheeting the powder-sheeting film two or more times to prepare an electrode material mixture film. That is, after the powder is converted into a sheet in step S4a, step S4b may be performed to roll the sheet to enhance strength and satisfy the porosity and loading amount required for the electrode.

Meanwhile, according to an embodiment of the present invention, stacking the electrode material mixture film on one or both sides of a current collector and then inserting the resulting product into a lamination unit for lamination may be further included. Through this, the electrode material mixture film is roll pressed onto the current collector, thereby preparing a dry electrode in which the electrode material mixture film is disposed on the current collector.

The lamination may involve attaching the electrode material mixture film onto the current collector by roll pressing. The lamination may be performed by a roll press method using a lamination unit including a lamination roll.

According to an embodiment of the present invention, the lamination roll may be maintained at a temperature of 20°C to 200°C.

The lamination may desirably be performed after at least one or at least two heat pressing operations, and then one or more additional heat pressing operations may be performed to achieve the desired porosity. When the lamination is performed during calendering as described above, the electrode appearance and calendering processability may be improved compared to lowering the porosity in the material mixture film state prior to lamination. Porosity control through additional heat pressing may be achieved by controlling the compression ratio with roll gap adjustment, which may be derived using Relation 2 below.

[Relation 2] Compression ratio (%) = [(electrode thickness) - (roll gap)] / [(electrode thickness) - (current collector thickness)]
[Relation 2]

### Lithium Secondary Battery

Hereinafter, a lithium secondary battery according to the present invention will be described.

The lithium secondary battery according to the present invention includes a dry electrode according to the present invention. Specifically, the lithium secondary battery according to the present invention includes a positive electrode, a negative electrode, a separator, and an electrolyte, where the positive electrode and/or the negative electrode may be a dry electrode, and specifically, the lithium secondary battery according to the present invention may be a lithium secondary battery including the dry electrode according to the present invention, a negative electrode, a separator, and an electrolyte. In a case in which only one of the positive electrode or the negative electrode is the dry electrode according to the present invention, the other electrode may be an electrode that is prepared through a typical wet preparation method.

In a case where the lithium secondary battery according to an embodiment of the present invention is a secondary battery including a liquid electrolyte, a separator may be included between a plurality of electrodes. The separator separates the negative electrode and the positive electrode and provides a movement path of lithium ions, where any separator may be used as the separator without particular limitation as long as it is typically used in a lithium secondary battery, and particularly, a separator having high moisture-retention ability for an electrolyte as well as low resistance to the transfer of electrolyte ions is desirable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, when the lithium secondary battery is an all-solid-state battery, the solid electrolyte membrane may be prepared to perform the function of the separator.

The separator separates the negative electrode and the positive electrode and provides a movement path of lithium ions, where any separator may be used as the separator without particular limitation as long as it is typically used in a lithium secondary battery, and particularly, a separator having high moisture-retention ability for an electrolyte as well as low resistance to the transfer of electrolyte ions is desirable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used.

Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is desirable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more desirable.

Any compound may be used as the lithium salt without particular limitation as long as it is a compound capable of providing lithium ions used in lithium secondary batteries. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used. The lithium salt may be used in a concentration range of 0.1 M to 4.0 M, desirably 0.5 M to 3.0 M, and more desirably 1.0 M to 2.0 M. When the concentration of the lithium salt is included within the above range, the electrolyte has suitable conductivity and viscosity and may thus exhibit excellent performance, and lithium ions may effectively move.

In addition to the above-described electrolyte components, one or more types of additives such as a haloalkylene carbonate-based compound such as difluoroethylene carbonate, pyridine, triethylphosphite, triethanolamine, a cyclic ether, ethylenediamine, n-glyme, hexaphosphoric triamide, a nitrobenzene derivative, sulfur, a quinone imine dye, an N-substituted oxazolidinone, an N,N-substituted imidazolidine, an ethylene glycol dialkyl ether, an ammonium salt, pyrrole, 2-methoxyethanol, and aluminum trichloride may be further included in the electrolyte for the purpose of enhancing the lifespan characteristics of batteries, suppressing reduction in battery capacity, enhancing the discharge capacity of batteries, and the like. In this case, the additive may be included in an amount of 0.1 wt% to 10.0 wt% with respect to a total weight of the electrolyte.

Also, since the lithium secondary battery according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be performed by a person skilled in the art to which the present invention pertains. The present invention may, however, be embodied in many different forms, and is not limited to examples set forth herein.

## Examples and Comparative Examples

### Example 1: Preparation of Powder for Electrode

Bundle-type carbon nanotubes (bulk density: 0.0738 $g/cm^3$ and volume cumulative average particle size: 460 $\mu$m) including multi-walled carbon nanotube units (average diameter: 10 nm and BET specific surface area: 250 $m^2/g$) were added into a disaggregation device (Galaxy Jet Mill, JEM Co.) to perform disaggregation. In this case, a rotor included in the disaggregation device had a rotation speed of 5300 rpm, and a nozzle included in the disaggregation device had a spray pressure of 4.2 bar. The bulk density of the prepared expandable carbon nanotube powder was then measured.

SEM images of the bundle-type carbon nanotubes and the prepared expandable carbon nanotube powder are shown in FIGS. 1 and 2.

Thereafter, lithium iron phosphate (BTR, LFP-S20) as an electrode active material, the expandable carbon nanotube powder as a conductive material, and polytetrafluoroethylene (PTFE) as a fibrillizable binder were added into a blender at a weight ratio of 96:0.5:3.5 and mixed at 5000 rpm for 40 minutes to prepare each material mixture composition.

Thereafter, the material mixture composition was added into a kneader and kneaded at a rotation speed of 40 rpm for 10 minutes at 1.0 atm and 160°C to prepare a mixed aggregate, and the mixed aggregate was added into a blender, pulvarized at 5000 rpm for 1 minute, and classified through a sieve having a pore size of 1 mm to prepare a powder for an electrode of Example 1.

**Example 2: Preparation of Powder for Electrode**

Bundle-type carbon nanotubes (bulk density: 0.110 g/cm$^3$ and volume cumulative average particle size: 530 $\mu$m) including multi-walled carbon nanotube units (average diameter: 10 nm and BET specific surface area: 250 m$^2$/g) were added into a disaggregation device (Galaxy Jet Mill, JEM Co.) to perform disaggregation. In this case, a rotor included in the disaggregation device had a rotation speed of 5400 rpm, and a nozzle included in the disaggregation device had a spray pressure of 5.2 bar. The bulk density of the prepared expandable carbon nanotube powder was then measured.

SEM images of the bundle-type carbon nanotubes and the prepared expandable carbon nanotube powder are shown in FIGS. 3 and 4.

Thereafter, lithium nickel cobalt manganese oxide (LNF) as a positive electrode active material, the expandable carbon nanotube powder as a conductive material, and polytetrafluoroethylene (PTFE) as a fibrillizable binder were added into a blender at a weight ratio of 97.6:1.4:1.0 and mixed at 1500 rpm for 4 minutes to prepare a material mixture composition.

The mixture composition was introduced into a kneader, and kneaded at a rotation speed of 40 rpm for 10 minutes at 1.1 atm and 160°C to prepare a mixed aggregate.

The mixed aggregate was added into a blender and pulvarized at a rotation speed of 1500 rpm for 1 minute to prepare a powder for an electrode.

**Comparative Example 1: Preparation of Powder for Electrode**

A powder for an electrode was prepared in the same manner as in Example 1, except that Ketjen Black, a dot-type conductive material, was used as the conductive material.

**Comparative Example 2: Preparation of Powder for Electrode**

A powder for an electrode was prepared in the same manner as in Example 2, except that the bundle-type carbon nanotubes were not disaggregated.

**Comparative Example 3: Preparation of Powder for Electrode**

A powder for an electrode was prepared in the same manner as in Example 2, except that the rotor had a rotation speed of 4000 rpm and the nozzle included in the disaggregation device was controlled to have a spray pressure of 5.2 bar.

The preparation method is summarized and described in Table 1 below.

[Table 1]

| | Rotor rotation speed (rpm) | Nozzle spray pressure (bar) | Bulk density of expandable carbon nanotube powder (g/cm$^3$) |
|---|---|---|---|
| Example 1 | 5300 | 4.2 | 0.006 |
| Example 2 | 5400 | 5.2 | 0.018 |
| Comparative Example 1 | - | - | - |
| Comparative Example 2 | - | - | 0.110 (bundle-type) |
| Comparative Example 3 | 4000 | 5.2 | 0.028 |

Referring to Table 1 above, Examples 1 and 2 satisfying the above-described range of rotor rotation speed and nozzle spray pressure had lower bulk density than Comparative Examples 2 and 3, indicating that the disintegration was appropriately performed.

## Experimental Example 1: Measurement of resistance of powder for electrode

2.0 g of the powder for an electrode of each of Example 1 and Comparative Example 1 was added into a cylindrical punch-die jig, and in a press machine that measures force, volume resistance was measured while increasing the force up to 2 tonf, and the volume, which decreased as the force increased, was also measured, in order to determine powder resistance at a force of 2 tonf.

The measurement results are shown in Table 2 below.

## Experimental Example 2: Resistivity measurement of electrode layer

The powder for an electrode of each of Example 1 and Comparative Example 1 described above was sheeted onto a calendaring roll (roll diameter: 200 mm, roll temperature: 100°C) in a roll-to-roll process to prepare an electrode material mixture film. Thereafter, one sheet of the electrode material mixture film was placed on one side of aluminum foil (thickness: 15 $\mu$m) having a conductive primer layer formed thereon and subjected to lamination through a roll press maintained at 100°C to prepare a dry electrode. In this case, the electrode material mixture film had a porosity of 28%.

The prepared dry electrode was cut into a size of 30 mm x 50 mm, and a current of 100 $\mu$A was applied to the electrode using an MP resistance measurement method. The resistivity ($\Omega$cm) value at any point within the electrode material mixture film was measured six times based on the potential difference measured between 46 probes, and an average value was calculated.

The measurement results are shown in Table 2 below.

## Experimental Example 3: Interfacial resistivity measurement

The powder for an electrode of each of Example 2 and Comparative Examples 2 and 3 described above was sheeted onto a calendaring roll (roll diameter: 160 mm, roll temperature: 80°C) in a roll-to-roll process to prepare a powder-sheeting film. Thereafter, an electrode composite film was prepared by running the powder-sheeting film through two calendar rolls with the gap maintained at 80 $\mu$m and the rolls operating at a speed ratio of 1:2, and then, the electrode material mixture film was placed on one side of aluminum foil (thickness: 12 $\mu$m) having a conductive primer layer formed thereon, and laminated using a roll press maintained at 80°C to prepare a dry electrode.

In this case, the electrode material mixture film had a porosity of 23.5%.

The prepared dry electrode was cut into a size of 30 mm x 50 mm, and a current of 100 $\mu$A was applied to the electrode using an MP resistance measurement method. The electrical resistivity ($\Omega$cm$^2$) value at any point between the electrode material mixture film and a current collector layer was measured six times based on the potential difference measured between 46 probes, and an average value was calculated.

The measurement results are shown in Table 3 below.

[Table 2]

| | Resistance of powder for electrode | | Resistivity of electrode layer |
|---|---|---|---|
| | Volume resistivity ($\Omega$cm) | Electrical conductivity (S/cm) | Electrode material mixture film resistivity ($\Omega$cm) |
| Example 1 | 9.7 | 0.1 | 7.9310 |
| Comparative Example 1 | 14 | 0.073 | 9.8135 |

Referring to Table 2 above, it is seen that when using the expandable carbon nanotube powder of Example 1, resistance of the powder for an electrode and electrode layer resistivity are lower compared to using the Ketjen Black of Comparative Example 1.

[Table 3]

| | Interfacial resistivity ($\Omega$cm$^2$) |
|---|---|
| Example 2 | 0.059 |
| Comparative Example 2 | 0.114 |

(continued)

|  | Interfacial resistivity ($\Omega cm^2$) |
|---|---|
| Comparative Example 3 | 0.081 |

Referring to Table 3 above, it is seen that Example 2 has lower interfacial resistivity than Comparative Examples 2 and 3.

## Experimental Example 4: Evaluation of battery lifespan characteristics

(1) Manufacturing of lithium secondary battery:

Artificial graphite was used as a negative electrode active material. A negative electrode was prepared including a negative electrode active material layer containing the negative electrode active material, CMC and SBR as negative electrode binders, and carbon black as a negative electrode conductive material at a weight ratio of 96.7:2.8:0.5. The negative electrode active material layer had a weight loading of 277 mg/ 25 cm$^2$ and a thickness of 67 $\mu$m, and copper foil having a thickness of 10 $\mu$m was used as the negative electrode current collector.

The dry positive electrodes of Example 1 and Comparative Example 1, the negative electrode, and a porous polyethylene separator were assembled using a winding method, and an electrolyte (ethylene carbonate (EC)/ethyl methyl carbonate (EMC) = 3/7 (volume ratio) and lithium hexafluorophosphate (1 mole of $LiPF_6$) was sprayed into the assembled battery to prepare a lithium secondary battery.

The lithium secondary battery was charged up to 30% SOC at 0.1 C C-rate to perform the activation process.

**2) 10-second resistance change rate measurement at 25°C:** The lithium secondary battery was evaluated for an initial RPT (Reference Performance Test) at 25°C, and then charged and discharged at 25°C with 0.5 CP (constant power) for lifespan evaluation. In this case, RPT was measured every 100 cycles to determine resistance changes. The 10-second resistance was obtained by calculating DC internal resistance through voltage drop that occurred when a discharge pulse was applied at 2.5 C for 10 seconds at 25°C.

The measurement results are shown in Table 4 below.

**3) 10-second resistance change rate measurement at 45°C:** The lithium secondary battery was evaluated for an initial RPT (Reference Performance Test) at 45°C, and then charged at 0.33 C with CCCV (3.65 V, 0.05 C cutoff) at 45°C and then discharged at 0.33 C with CC (2.5 V cutoff) for lifespan evaluation. In this case, RPT was measured every 100 cycles to determine resistance changes. The 10-second resistance was obtained by calculating DC internal resistance through voltage drop that occurred when a discharge pulse was applied at 2.5 C for 10 seconds at 25°C.

The measurement results are shown in Table 4 below.

[Table 4]

|  | 25°C Resistance | | | 45°C Resistance | | |
|---|---|---|---|---|---|---|
|  | Initial 10-second resistance (mohm) | 500-cycle 10-second resistance (mohm) | 500-cycle resistance (%) vs. initial | Initial 10-second resistance (mohm) | 500-cycle 10-second resistance (mohm) | 500-cycle resistance (%) vs. initial |
| Example 1 | 818.5 | 670.4 | 81.9 | 825.9 | 759.3 | 91.9 |
| Comparative Example 1 | 814.8 | 698.1 | 85.7 | 811.1 | 781.5 | 96.4 |

Referring to Table 4 above, it is seen that Example 1 has lower 500-cycle resistance (%) vs. initial at 25°C and 45°C than Comparative Example 1. The lower 500-cycle resistance (%) vs. initial indicates that the expandable carbon nanotube powder having an expandable structure may form an appropriate conductive path in the electrode and be uniformly distributed in the electrode. This allows the electrolyte to exhibit excellent wettability in the electrode, resulting in excellent battery lifespan characteristics and output characteristics.

## Claims

**1.** A method for preparing an expandable carbon nanotube powder, the method comprising disaggregating carbon nanotube aggregates via mutual collision in a disaggregation device in a solvent-free state,

wherein the disaggregation is performed by rotation of two or more rotors provided in the disaggregation device and by a high-pressure gas sprayed from a nozzle provided in the disaggregation device, the rotors have a rotation speed of 4100 rpm or greater, and the nozzle sprays the high-pressure gas at a pressure of 3.5 bar or greater.

2. The method for preparing the expandable carbon nanotube powder of claim 1, wherein the disaggregation is performed by swirling airflow generated by the rotation of the two or more rotors provided in the disaggregation device and by the high-pressure gas sprayed from the nozzle provided in the disaggregation device.

3. The method for preparing the expandable carbon nanotube powder of claim 1, wherein the disaggregation is performed by swirling airflow and impact force generated by the rotation of the two or more rotors provided in the disaggregation device and by the high-pressure gas sprayed from the nozzle provided in the disaggregation device.

4. The method for preparing the expandable carbon nanotube powder of claim 1, wherein the rotors have a rotation speed of 5000 rpm to 5400 rpm.

5. The method for preparing the expandable carbon nanotube powder of claim 1, wherein the nozzle sprays the high-pressure gas at a pressure of 5.0 bar to 7.5 bar.

6. The method for preparing the expandable carbon nanotube powder of claim 1, wherein the carbon nanotube aggregates have a bulk density of 0.011 $g/cm^3$ to 0.900 $g/cm^3$.

7. The method for preparing the expandable carbon nanotube powder of claim 1, wherein the carbon nanotube aggregates have an average diameter of 100 $\mu$m to 600 $\mu$m.

8. The method for preparing the expandable carbon nanotube powder of claim 1, wherein the carbon nanotube aggregates comprise multi-walled carbon nanotube units.

9. The method for preparing the expandable carbon nanotube powder of claim 8, wherein the multi-walled carbon nanotube units have an average diameter of 5 nm to 200 nm.

10. The method for preparing the expandable carbon nanotube powder of claim 8, wherein the multi-walled carbon nanotube units have a BET specific surface area of 50 $m^2/g$ to 500 $m^2/g$.

11. The method for preparing the expandable carbon nanotube powder of claim 8, wherein the multi-walled carbon nanotube units have an average length of 0.1 $\mu$m to 100 $\mu$m.

12. The method for preparing the expandable carbon nanotube powder of claim 1, wherein the expandable carbon nanotube powder prepared by the disaggregation has a bulk density of 0.025 $g/cm^3$ or less.

13. A dry electrode comprising the expandable carbon nanotube powder prepared by the preparation method according to claim 1.

14. A lithium secondary battery comprising the dry electrode of claim 13.

[FIG. 1]

[FIG. 2]

[FIG. 3]

[FIG. 4]

## INTERNATIONAL SEARCH REPORT

| International application No. |
|---|
| **PCT/KR2025/008438** |

| | |
|---|---|
| **A.** | **CLASSIFICATION OF SUBJECT MATTER** |

**H01M 4/62**(2006.01)i; **C01B 32/158**(2017.01)i; **H01M 4/13**(2010.01)i; **H01M 10/052**(2010.01)i; **H01M 4/04**(2006.01)i; **C01B 32/174**(2017.01)i; **H01M 4/136**(2010.01)i; **H01M 4/02**(2006.01)i

According to International Patent Classification (IPC) or to both national classification and IPC

| | |
|---|---|
| **B.** | **FIELDS SEARCHED** |

Minimum documentation searched (classification system followed by classification symbols)

H01M 4/62(2006.01); B01F 3/00(2006.01); B01F 3/18(2006.01); B82B 3/00(2006.01); C01B 31/02(2006.01); C01B 32/158(2017.01); C01B 32/182(2017.01); H01M 4/13(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 건식 전극 (dry electrode), 팽창형 탄소 나노 튜브 (expandable carbon nanotube), 분체 (powder), 무용매 (solven-free), 해쇄 (crushing), 로터 (rotor), 회전 속도 (rotational speed), 고압 기체 (high pressure gas)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | KR 10-2013-0053015 A (DH HOLDINGS CO., LTD.) 23 May 2013 (2013-05-23) abstract; paragraphs [0026], [0045], [0046]; claims 1, 3 | 1-14 |
| A | KR 10-2015-0085923 A (LG CHEM, LTD.) 27 July 2015 (2015-07-27) abstract; paragraphs [0001], [0028], [0031], [0038] | 1-14 |
| A | BADDOUR, C. E. et al. An investigation of carbon nanotube jet grinding. Chemical Engineering and Processing. 2008, vol. 47, pp. 2195-2202. abstract; page 2197 | 1-14 |
| A | KR 10-2024-0022152 A (SOLE MATERIALS. CO., LTD.) 20 February 2024 (2024-02-20) abstract; claims 1-13 | 1-14 |
| A | CN 116936735 A (YONGJIANG LABORATORY) 24 October 2023 (2023-10-24) abstract; claims 1-10 | 1-14 |

☑ Further documents are listed in the continuation of Box C.  ☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 September 2025** | **16 September 2025** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2025/008438** |

| C. | DOCUMENTS CONSIDERED TO BE RELEVANT | |
| --- | --- | --- |
| Category* | Citation of document, with indication, where appropriate, of the relevant passages | Relevant to claim No. |
| A | PARK, G. et al. Solvent-Free Processed Cathode Slurry with Carbon Nanotube Conductors for Li-Ion Batteries. Nanomaterials. 2023, vol. 13, thesis no.: 324, pp. 1-9. <br> abstract; pages 1-3 | 1-14 |

Form PCT/ISA/210 (second sheet) (July 2022)

**INTERNATIONAL SEARCH REPORT**
**Information on patent family members**

International application No.

**PCT/KR2025/008438**

| Patent document cited in search report | | | Publication date (day/month/year) | Patent family member(s) | | | Publication date (day/month/year) |
|---|---|---|---|---|---|---|---|
| KR | 10-2013-0053015 | A | 23 May 2013 | KR | 10-1365456 | B1 | 20 February 2014 |
| KR | 10-2015-0085923 | A | 27 July 2015 | KR | 10-1661387 | B1 | 29 September 2016 |
| KR | 10-2024-0022152 | A | 20 February 2024 | None | | | |
| CN | 116936735 | A | 24 October 2023 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240079211
- KR 1020240079212